# EUROPÄISCHE PATENTSCHRIFT

(11) **EP 2 199 690 B1**
(45) Veröffentlichungstag und Bekanntmachung des Hinweises auf die Patenterteilung: **06.09.2017**
(21) Anmeldenummer: 09176299.7
(22) Anmeldetag: 18.11.2009
(51) Int. Cl.: F24D 11/00, F24D 19/10

(54) **Verfahren und Vorrichtung zum Regeln einer thermischen Solaranlage**
Method and device for regulating a thermal solar assembly
Procédé et dispositif destinés au réglage d'une installation solaire thermique

(30) Priorität: 09.12.2008 DE 102008061130
(43) Veröffentlichungstag der Anmeldung: 23.06.2010
(73) Patentinhaber: Viessmann Werke GmbH & Co. KG, 35107 Allendorf (DE)
(72) Erfinder: Osterloh, Reinhard, 59955 Winterberg (DE); Hafner, Bernd, 35108 Allendorf (DE); Handt, Michael, 35066 Frankenberg (DE)
(74) Vertreter: MERH-IP Matias Erny Reichl Hoffmann Patentanwälte PartG mbB

(56) Entgegenhaltungen:
- EP-A2- 1 950 499
- DE-A1- 3 835 012
- DE-A1- 19 707 164
- DE-C1- 19 654 037

## Beschreibung

Die vorliegende Erfindung betrifft ein Verfahren und eine Vorrichtung zum Regeln einer thermischen Solaranlage umfassend einen Wärmespeicher zum Speichern von Solarwärme, einen Solarkollektor zur Erzeugung von Sonnenwärme, einen Wärmeträger zum Transport von Wärmeenergie zu dem Wärmespeicher und eine Pumpe zum Zirkulieren des Wärmeträgers. Derartige Verfahren und Vorrichtungen sind aus dem Stand der Technik bekannt.

Der Solarregler einer solchen thermischen Solaranlage hat grundsätzlich die Aufgabe, eine Pumpenleistung im Solarkreislauf mit einem Wärmeträger so zu regeln, dass eine optimale energetische Ausnutzung der Sonnenenergie erreicht wird. Zum Einsatz kommen typischerweise Differenztemperaturregler, wobei der Regler die Temperaturdifferenz zwischen Solarkollektor und Wärmespeicher auf einen vorgegebenen Differenztemperatursollwert durch Steuerung der Pumpenleistung regelt.

Der Wärmespeicher einer thermischen Solaranlage kann nur bis zu einer bestimmten Maximaltemperatur erwärmt werden, um beispielsweise einen Verbrühungsschutz an der Zapfstelle zu gewährleisten, oder um ein Verkalkungsrisiko des Speichers und des Wärmetauschers zu reduzieren. Der Solarregler überwacht das Nichtüberschreiten dieser Speichermaximaltemperatur; erreicht die gemessene Speichertemperatur die Speichermaximaltemperatur, wird die Pumpe ausgeschaltet. Ebenso hat der Solarkollektor eine Maximaltemperatur; überschreitet die Kollektortemperatur den Wert der bestimmten Kollektormaximaltemperatur, wird zum Schutz der Anlagenkomponenten die Pumpe ebenso ausgeschaltet.

Muss der Regelbetrieb der Solaranlage unterbrochen werden, beispielsweise durch Erreichen der Speichermaximaltemperatur bei Energieüberschuss durch starke Sonneneinstrahlung im Hochsommer, entsteht eine sogenannte Stagnationszeit. Lange Stagnationszeiten des Solarkreises bewirken aufgrund der hohen auftretenden Temperaturen ein Risiko für die eingesetzten Materialien und für das Wärmeträgermedium, beispielsweise durch nicht reversible Zersetzung des Wärmeträgermediums. Daher sind diese Stagnationszeiten so kurz wie möglich zu halten, d.h. der Solarkreis sollte solange wie möglich im Betrieb gehalten werden.

Aus dem Stand der Technik sind hierzu Regelverfahren bekannt, bei denen durch eine Erwärmung des Speichers über die Speichermaximaltemperatur hinaus (sog. Kühlfunktion des Kollektors) und ggf. Abkühlung des Speichers über den Solarkollektor in der darauffolgenden Nacht (sog. Rückkühlfunktion des Kollektors) das Abschalten des Solarkreislaufs (Stagnation) verzögert oder vermieden werden kann und damit eine Reduzierung der Stagnationszeit realisiert wird.

Die deutsche Offenlegungsschrift DE 19707164 A1 offenbart ein Umwälzsystem für Sonnenkollektoren und Heizungsanlagen mit einer Pumpe zum Erzeugen eines Fluidvolumenstroms von einer Heizvorrichtung zu einem Wärmeabnehmer, welcher abhängig von der Fluidtemperaturdifferenz zwischen der Heizvorrichtung und dem Wärmeabnehmer arbeitet. Die Pumpe weist einen Gleichstrommotor auf, dessen Drehzahl abhängig von der Fluidtemperaturdifferenz stufenlos regelbar ist, um den Volumenstrom an die Heizleistung der Heizvorrichtung anzupassen.

Ein Nachteil dieses aus dem Stand der Technik bekannten Verfahrens ist beispielsweise, dass die Speichertemperatur über den eingestellten Maximalwert erhöht werden muss. Zudem ist in der Regel ein zusätzlicher Nachtbetrieb (Rückkühlfunktion des Kollektors) erforderlich, um die Speichertemperatur wieder unter den Maximalwert abzukühlen, was eine zusätzliche Belastung der Anlagenkomponenten mit sich bringt.

Es ist deshalb eine Aufgabe der vorliegenden Erfindung, ein effizienteres und anlagenschonenderes Regelverfahren und eine Vorrichtung zur Reduktion der Stagnationszeiten bei hohen auftretenden Temperaturen bereitzustellen.

Diese Aufgabe wird durch ein Verfahren gemäß Patentanspruch 1 und eine Vorrichtung gemäß Patenanspruch 6 gelöst. Die abhängigen Patentansprüche betreffen vorteilhafte Ausgestaltungen der Erfindung.

Erfindungsgemäß kann zur Reduktion der Stagnationszeit einer Solaranlage eine Temperatur T_{K}, die von einer Temperatur eines Solarkollektors abhängt, erfasst werden. Weiterhin kann eine Temperatur Ts, die von einer Temperatur eines Wärmespeichers abhängt, erfasst werden. Weiterhin kann eine Differenztemperatur T_{KS} aus T_{K} und Ts berechnet werden. Weiterhin kann ein erster Regelbetrieb ausgeführt werden, bei dem die Differenztemperatur T_{KS} auf einen vorbestimmten ersten Sollwert S_{KS} durch Steuerung einer Pumpenleistung geregelt wird. Weiterhin kann ein zweiter Regelbetrieb ausgeführt werden, bei dem die Kollektortemperatur T_{K} auf einen vorbestimmten zweiten Sollwert S_{K} durch Steuerung der Pumpenleistung geregelt wird. Hierbei kann S_{K} so festgelegt werden, dass durch eine Erhöhung der Kollektortemperatur T_{K} die Energiezufuhr zur Wärmespeicherstelle verringert wird. Weiterhin kann vom ersten Regelbetrieb in den zweiten Regelbetrieb geschalten werden, wenn im Förderbetrieb der Pumpe die Temperatur Ts eine vorbestimmte Grenztemperatur T_{G} überschreitet, wobei die Grenztemperatur T_{G} kleiner als eine vorbestimmte Maximaltemperatur T_{Smax} der Wärmespeicherstelle ist. Weiterhin kann vom zweiten Regelbetrieb in den ersten Regelbetrieb zurückgeschaltet werden, wenn die Temperatur Ts die Grenztemperatur T_{G} um mehr als einen vorbestimmten Wert As unterschreitet.

Die vorliegende Erfindung erlaubt damit eine Reduktion der Stagnationszeiten, da durch Umschalten von einem ersten Differenztemperaturregelbetrieb zu einem Regelbetrieb, bei dem die Kollektortemperatur selbst geregelt wird, zu einem Zeitpunkt, wo die Speichertemperatur Ts die Speichermaximaltemperatur T_{Smax} zu erreichen droht, das Erreichen der Speichermaximaltemperatur verzögert oder vermieden werden kann ohne die Anlage abschalten zu müssen. Durch Regelung der Kollektortemperatur in einem zweiten Regelbetrieb nach einem Sollwert S_{K}, der zu einer Erhöhung der Kollektortemperatur führt, reduziert sich der Volumenstrom im Solarkreis und die Kollektortemperatur steigt an. Da sich der Wirkungsgrad des Kollektors mit steigender Temperaturdifferenz zur Umgebung reduziert, wird auf diese Weise bei einem Überangebot an Solarenergie dem kurz vor der Maximaltemperatur stehenden Wärmespeicher weniger Energie zugeführt, als bei einer konventionellen Differenztemperaturregelung. Ein weiterer Vorteil ist, dass durch das erfindungsgemäße Verfahren die Stagnationszeit reduziert wird, ohne die Speichermaximaltemperatur überschreiten zu müssen. Dadurch wird auch eine zusätzliche Belastung der Anlage durch einen zusätzlichen, energieverbrauchenden Nachtbetrieb (Rückkühlfunktion des Kollektors) vermieden.

Weiterhin kann der Sollwert S_{K} um einen Wert A_{K} unterhalb einer Kollektormaximaltemperatur T_{Kmax} und mindestens um den Sollwert S_{KS} des ersten Regelbetriebs oberhalb der Wärmespeichertemperatur Ts festgelegt werden, wobei der Wert A_{K} derart festgelegt ist, dass ein Sicherheitsabstand von S_{K} zur Kollektormaximaltemperatur gewährleistet ist. Damit ist zum einen sichergestellt, dass im zweiten Regelbetrieb ein Erreichen der Kollektormaximaltemperatur vermieden wird, und andererseits die vorteilhafte Solltemperaturdifferenz des ersten Regelkreis nicht unterschritten wird.

Bevorzugterweise kann der Wert von A_{K} in einem Bereich von 5-15 % der Kollektormaximaltemperatur T_{Kmax} festgelegt werden. Dadurch kann bestmöglich der Effekt ausgenutzt werden, dass der Wirkungsgrad des Kollektors mit zunehmendem Temperaturunterschied zur Umgebung schlechter wird, um die Energiezufuhr zum Wärmespeicher zu reduzieren und gleichzeitig sicherzustellen, dass ein Erreichen der Kollektormaximaltemperatur vermieden wird.

Die Grenztemperatur kann aber durchaus auch weit unter der Speichermaximaltemperatur liegen. Beispielsweise kann die Speichermaximaltemperatur 90 °C betragen und die Grenztemperatur 60 °C. Damit wird der Speicher bis zur üblichen Nutztemperatur "normal" geladen und es steht im Anschluss ein sehr breiter Temperaturbereich und damit ein hohes Energieaufnahmevermögen für die Stagnationszeitreduzierung zur Verfügung. Dadurch wird es teilweise ermöglicht, eine Stagnation gänzlich zu verhindern. Auf der Brauchwasserseite wird in diesem Fall ein thermostatischer Mischer eingesetzt, um Verbrühungen durch zu hohe Brauchwassertemperaturen zu vermeiden.

Die Grenztemperatur T_{G} kann auf einen Wert in einem Bereich von 60-95 % der Maximaltemperatur T_{Smax} der Wärmespeicherstelle festgelegt werden. Ein vorteilhafter Bereich ist 85-95%. Dadurch kann vorteilhafter Weise ein zu frühes Umschalten in einen zweiten Regelbetrieb vermieden werden, was die Gesamteffizienz der Solaranlage reduzieren würde. Gleichzeitig ist sichergestellt, dass ein genügend großer Sicherheitsabstand besteht, der vermeidet, dass nach Umstellen auf den zweiten Regelbetrieb genügend Zeit bleibt, um die Wirkung des zweiten Regelbetriebs zu entfalten bevor die Speichermaximaltemperatur erreicht wird.

Weiterhin kann der Wert von Aₛ in einem Bereich von 5-15 % der Maximaltemperatur T_{Smax} der Wärmespeicherstelle festgelegt werden. Damit wird vorteilhafter Weise sichergestellt, dass sich einerseits die Temperatur des Wärmespeichers genügend weit von der Maximaltemperatur des Wärmespeichers entfernt, und andererseits ein schnelles Zurückschalten zum ersten Regelbetrieb ermöglicht wird.

Zusammenfassend wird durch die vorliegende Erfindung ein effizienteres und anlagenschonenderes Regelverfahren zur Reduzierung der Stagnationszeit einer thermischen Solaranlage ermöglicht, um die Komponenten der Anlage und den Wärmeträger vor lang andauernden hohen Temperaturen zu schützen. Das Verfahren vermeidet das Überschreiten der Speichermaximaltemperatur und einen unnötigen Nachtbetrieb zur Kühlung des Speichers (Rückkühlfunktion). Im Gegensatz hierzu ermöglicht das erfindungsgemäße Umschalten auf einen zweiten Regelbetrieb, z.B. bei einem Überangebot an solarer Energie, den Betrieb der Solaranlage bei einem Arbeitspunkt mit niedrigem Wirkungsgrad.

Bevorzugte Ausführungsformen der vorliegenden Erfindung werden im Folgenden unter Bezugnahme auf die beigefügte Zeichnung näher beschrieben.
Fig. 1 zeigt schematisch einen Aufbau einer erfindungsgemäßen thermischen Solaranlage, umfassend ein erstes Ausführungsbeispiel einer erfindungsgemäßen Vorrichtung zum Regeln der Solaranlage;
Fig. 2 zeigt schematisch den Aufbau der Vorrichtung zum Regeln der Solaranlage aus Fig. 1.
Fig. 3 zeigt schematisch ein Ablaufdiagramm eines ersten und zweiten Regelbetriebs sowie das Umschalten zwischen dem ersten und dem zweiten Regelbetrieb gemäß dem erfindungsgemäßen Verfahren;
Fig. 4 zeigt beispielhaft den Verlauf der Speichertemperatur Ts, der Kollektortemperatur T_{K}, und der Pumpenleistung zum Zeitpunkt des Umschaltens vom ersten auf den zweiten Regelbetrieb bei Ausführung des erfindungsgemäßen Verfahrens.

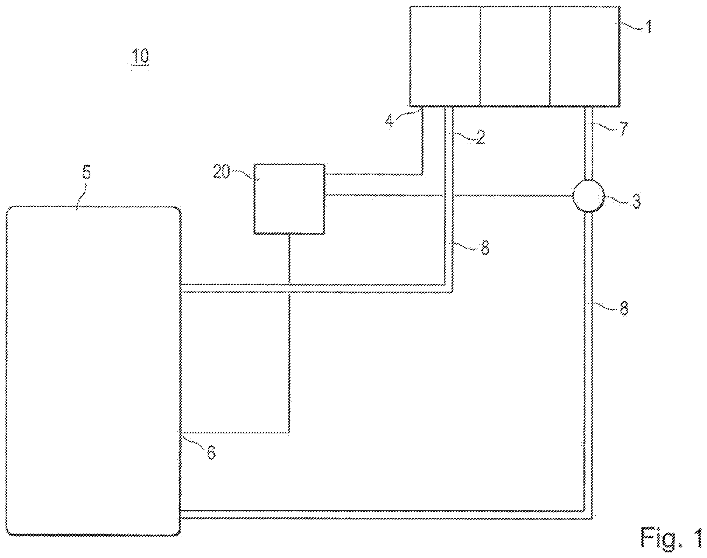

Die in Fig. 1 dargestellte thermische Solaranlage weist ein Regelgerät 20, einen Solarkollektor 1, einen Wärmespeicher 5, eine Pumpe 3, einen Solarkreislauf 8 mit einer Leitung 2 von dem Sonnenkollektor 1 zum Wärmespeicher 5 und eine Rücklaufleitung 7, von dem Wärmespeicher 5 zu dem Sonnenkollektor 1, auf sowie eine Temperaturmessstelle 4, die eine Temperatur T_{K}, die von einer Temperatur des Solarkollektors 1 abhängt, erfasst, und eine weitere Messstelle 6, die eine Temperatur Ts, die von einer Temperatur der Wärmespeicherstelle 5 abhängt, erfasst.

Eine solche in Fig. 1 dargestellte Solarkollektoranlage besteht aus einem typischerweise auf dem Dach eines Gebäudes angeordneten Solarkollektor 1 und einem in der Regel im Keller desselben Gebäudes untergebrachten Wärmespeichers 5, die über zwei Leitungen 8, einer Vor- und einer Rücklaufleitung, miteinander verbunden sind. In dem aus dem Solarkollektor 1, dem Wärmespeicher 5 und den beiden Leitungen 8 gebildeten Kreislauf zirkuliert ein fluider Wärmeträger. Der Solarkollektor 1 sammelt das Sonnenlicht und erwärmt den Wärmeträger. Im Kreislauf der Anlage transportiert der Wärmeträger die Wärme zum Wärmespeicher 5, wo über einen Wärmetauscher (nicht gezeigt) das Brauch- oder Heizungswasser erwärmt wird. Beispielsweise wird im Falle eines Kombispeichers zur solaren Heizungsunterstützung Heizungswasser im Speicher erwärmt und das Brauchwasser über einen im Speicher liegenden Wärmetauscher erwärmt. Der Wärmespeicher sorgt dafür, dass die Wärme auch zu den Zeiten verfügbar ist, an denen die Sonne nicht scheint. Eine Pumpe 3 sorgt im Solarkreislauf für die Umwälzung des fluiden Wärmeträgers und wird in Gang gesetzt, wenn die Temperatur im Solarkollektor 1 um einen festgelegten Mindestwert höher ist als im Wärmespeicher 5.

Die Steuerung der Pumpe erfolgt in der Regel mittels eines zentralen Solarreglers 20 in Abhängigkeit von der Temperatur des Wärmeträgers im Solarkollektor 1 und im Wärmespeicher 5. Zur Erfassung dieser Temperaturen wird an der Stelle 4 des Solarkreislaufes die Kollektortemperatur ermittelt, und an einer weiteren Stelle 6 die Temperatur Tₛ im Wärmespeicher 5.

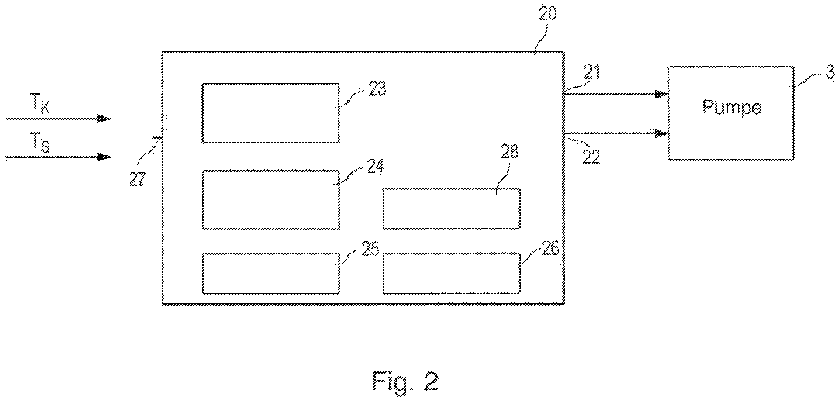

Fig. 2 zeigt schematisch den Aufbau eines ersten Ausführungsbeispiels eines Solarreglers 20 zur Durchführung des erfindungsgemäßen Verfahrens. Als Eingänge stehen über eine Schnittstelle 27 die an den Messstellen 4 und 6 erfassten Werte der Kollektortemperatur T_{K} und der Speichertemperatur Ts zur Verfügung. Die Regelvorrichtung 20 steuert die Pumpenleistung um eine optimale energetische Ausnutzung der Sonnenenergie zu erreichen. Als Aktor kann die Regelvorrichtung 20 hierzu über eine Schnittstelle 21 die Pumpe 3 ein- und ausschalten, sowie über eine Schnittstelle 22 mittels eines Pulsweitenmodulations-Signal (PWM-Signal) die Pumpendrehzahl regeln. Die Erfindung ist nicht auch eine Pumpensteuerung mittels Pulsweitenmodulation beschränkt. Üblicherweise können auch andere dem Fachmann bekannte Verfahren, wie beispielsweise die Wellenpaketsteuerung, angewendet werden.

Die Pumpe wird eingeschaltet, wenn die Kollektortemperatur T_{K} die Speichertemperatur Ts um 8 Kelvin, den Betrag des sogenannten Einschaltpunkts, überschritten hat. Die Pumpe wird ausgeschaltet, wenn die Differenz von Speichertemperatur Ts und Kollektortemperatur T_{K} kleiner als 4 Kelvin wird (Ausschaltpunkt). Die Werte für den Einschaltpunkt und den Ausschaltpunkt können anlagenspezifisch festgelegt werden, um gegebenenfalls die Betriebsparameter der Solaranlage anzupassen.

Das Ausführungsbeispiel der Regelvorrichtung 20 umfasst weiterhin ein Mittel 26 zum Berechnen der Differenztemperatur T_{KS} aus den empfangenen Werten T_{K} und Ts und ein Mittel 23 zum Ausführen eines ersten Regelbetriebs, bei dem die Differenztemperatur T_{KS} auf einen vorbestimmten ersten Sollwert S_{KS} durch Steuerung einer Pumpendrehzahl geregelt wird. Bei ausgeschalteter Pumpe ist der Regler deaktiviert. Der Wirksinn des Reglers ist negativ, d.h. bei positiven Regelabweichungen (Differenztemperatur T_{KS} < Sollwert S_{KS}) wird die Pumpenleistung über ein entsprechendes Signal über die Schnittstelle 22 reduziert, bei negativen Regelabweichungen wird sie dagegen erhöht. Ein Sollwert S_{KS} dieses ersten Regelbetriebs wird auf einen Wert von 10 Kelvin voreingestellt, kann aber als Parameter in einem bestimmten Wertebereich festgelegt werden.

Das Ausführungsbeispiel des Solarreglers 20 umfasst weiterhin ein Mittel 24 zum Ausführen eines zweiten Regelbetriebs, bei dem die Kollektortemperatur T_{K} auf einen vorbestimmten zweiten Sollwert S_{K} durch Steuerung der Pumpenleistung geregelt wird, wobei S_{K} so festgelegt wird, dass durch eine Erhöhung der Kollektortemperatur T_{K} die Energiezufuhr zur Wärmespeicherstelle 5 verringert wird. Wenn das Mittel 24 aktiv ist, wird nicht mehr die Differenztemperatur zwischen Solarkollektor 1 und Wärmespeicher 5, sondern die Kollektortemperatur selbst geregelt. Der Mechanismus und Wirksinn des Reglers ist derselbe wie oben beschrieben, nur dass der Sollwert des Reglers von S_{KS} im Differenztemperaturregelbetrieb durch S_{K} im zweiten Regelbetrieb ersetzt wird und das Mittel 24 die Größe T_{K} regelt anstatt der Größe T_{KS}.

Das Ausführungsbeispiel des Solarreglers 20 verfügt weiterhin über ein Mittel, das weitere Regelfunktionen ausübt, einschließlich der Überwachung und Einhalten der Speichermaximaltemperatur und Kollektormaximaltemperatur. Jede Regelfunktion ist in dem Ausführungsbeispiel mit einer Priorität belegt. Regelfunktionen, die mit einer hohen Priorität belegt sind, d.h. Funktionen, die mit höherer Priorität im Vergleich zu Funktionen mit niedriger Priorität ausgeführt werden, sind die Überwachung der Kollektormaximaltemperatur, der Speicher- und Kollektorfrostschutz und die Speichermaximaltemperaturüberwachung.

Die Stagnationszeitreduzierungsfunktion mittels des erfindungsgemäßen zweiten Regelbetriebs hat hierzu eine niedrigere Priorität, jedoch eine höhere Priorität als die Differenztemperaturregelung gemäß des ersten Regelbetriebs, so dass bei Überschreiten einer Grenztemperatur T_{G}, vom ersten auf den zweiten Regelbetrieb umgeschaltet werden kann, wie im folgenden Ablaufdiagramm erläutert wird.

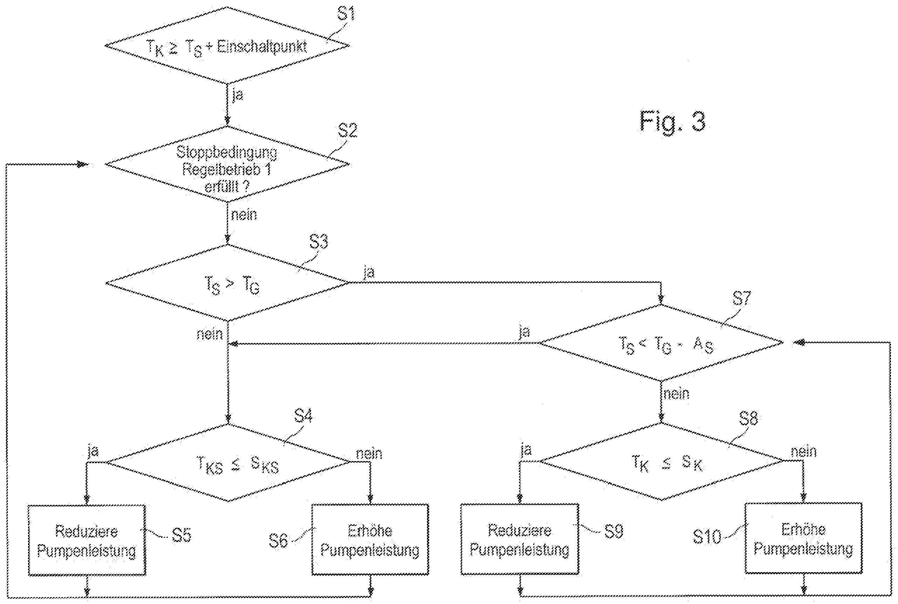

Fig. 3 zeigt schematisch ein Ablaufdiagramm eines ersten und zweiten Regelbetriebs sowie das Umschalten zwischen dem ersten und dem zweiten Regelbetrieb gemäß dem erfindungsgemäßen Verfahren, wie es beispielsweise durch die in Fig. 1 und 2 gezeigte Solaranlage ausgeführt werden kann.
In Schritt S1 prüft das Mittel 27, ob vorher festgelegte Bedingungen für das Einschalten der Pumpe 3 erfüllt sind. Eine Kollektorkreispumpe wird erst dann eingeschaltet, wenn die Kollektortemperatur T_{K} die Speichertemperatur Ts um einen Mindestwert "Einschaltpunkt" überschritten hat. Überschreitet die Kollektortemperatur T_{K} die Speichertemperatur Ts um den festgelegten Wert "Einschaltpunkt", dann wird in S2 geprüft, ob eine vorgegebene Stoppbedingung für den ersten Regelbetrieb erfüllt ist. Eine solche Stoppbedingung ist dann gegeben, wenn die Pumpe von einer Regelfunktion mit höherer Priorität abgeschaltet wurde, wenn zum Beispiel die Speichermaximaltemperatur erreicht wurde.
Wenn die Stoppbedingung in Schritt S2 nicht erfüllt ist, dann wird in Schritt S3 geprüft, ob die Temperatur Ts eine Grenztemperatur T_{G} überschritten hat. Die Standardeinstellung für den Wert T_{G} wird mit 55°C in einem Bereich von 85-95% der Maximaltemperatur T_{Smax} der Wärmespeicherstelle 5 festgelegt. Die Maximaltemperatur T_{Smax} beträgt 60°C.

Die Grenztemperatur kann auch ein in einem anderen Bereich weit unterhalb der Speichermaximaltemperatur festgelegt werden. Ein zweites Ausführungsbeispiel hat eine Konfiguration mit einer Temperatur T_{G} von 60°C bei einer Speichermaximaltemperatur von 90 °C. Durch diese Festlegung der Grenztemperatur T_{G} wird der Speicher bis zur üblichen Nutztemperatur "normal" geladen und es steht im Anschluss ein sehr breiter Temperaturbereich und damit ein hohes Energieaufnahmevermögen für die Stagnationszeitreduzierung zur Verfügung. Dadurch wird es teilweise ermöglicht, eine Stagnation gänzlich zu verhindern. Auf der Brauchwasserseite wird in diesem Fall ein thermostatischer Mischer eingesetzt, um Verbrühungen durch zu hohe Brauchwassertemperaturen zu vermeiden.

Falls diese Grenztemperatur T_{G} nicht überschritten wurde, wird der Prüfschritt S4 des ersten Regelbetriebs ausgeführt. Hierbei wird geprüft, ob die Differenztemperatur T_{KS} ≤ der vorgegebenen Solltemperaturdifferenz S_{KS} ist. Der Wert S_{KS} ist auf einen Wert in einem Bereich 5 bis 20 Kelvin festgelegt. Falls die Differenztemperatur kleiner der Solltemperaturdifferenz ist, wird im Schritt S5 die Pumpenleistung in Abhängigkeit der ermittelten Temperaturdifferenz reduziert. Ist die berechnete Differenztemperatur T_{KS} größer als die Solltemperaturdifferenz S_{KS}, wird in Schritt S6 die Pumpendrehzahl erhöht. Dadurch erhöht der Solarregler den Wärmetransport zum Wärmespeicher 5. Ist die berechnete Differenztemperatur T_{KS} kleiner als die Solltemperaturdifferenz S_{KS}, wird in Schritt S5 die Pumpendrehzahl erniedrigt. Dadurch regelt der Solarregler den Wärmetransport zum Wärmespeicher 5 und regelt die Ist-Temperaturdifferenz T_{KS} auf die Solldifferenz S_{KS} ein. Danach erfolgt eine erneute Prüfung der Stoppbedingung des Regelbetriebs 1 in Schritt S2. Solange die Speichertemperatur Ts unter der vorgegebenen Grenztemperatur T_{G} bleibt, werden diese Schritte des ersten Regelbetriebs weiter ausgeführt.

Ergibt die Prüfung im Schritt S3, dass die Temperatur Ts die Grenztemperatur T_{G} überschritten hat und damit die Umschaltbedingung vom ersten zum zweiten Regelbetrieb erfüllt ist, dann wird im Schritt S7 überprüft, ob die Stoppbedingung des zweiten Regelbetriebs erfüllt ist. Dies ist erfindungsgemäß dann der Fall, wenn die Temperatur Ts die Grenztemperatur T_{G} wieder um mehr als einen vorbestimmten Wert A_{S} unterschritten hat. Bevorzugterweise ist der von As im Bereich von 5-15% der Maximaltemperatur T_{Smax} der Wärmespeicherstelle 5 festgelegt. Eine Standardeinstellung in dem erfindungsgemäßen Ausführungsbeispiel legt für As den Wert 5 K fest, bei einem Wert von 60°C für T_{Smax}.

Ist die im Schritt S7 überprüfte Stoppbedingung des zweiten Regelbetriebs nicht erfüllt, wird im Schritt S8 geprüft, ob die Kollektortemperatur T_{K} kleiner oder gleich einem Wert S_{K} ist, der den Sollwert des zweiten Regelbetriebs darstellt. Falls die Kollektortemperatur T_{K} kleiner als der Wert S_{K} ist, wird in Schritt S9 die Pumpenleistung reduziert. Dadurch reduziert sich der Volumenstrom, dadurch erhöht sich die Kollektortemperatur T_{K}, und mit steigender Temperaturdifferenz des Kollektors zur Außentemperatur verschlechtert sich dessen Wirkungsgrad, wodurch sich die Energiezufuhr zum Wärmespeicher 5 weiter reduziert. Auf diese Weise kann vermieden werden, dass die Speichertemperatur Ts bis zur Speichermaximaltemperatur T_{Smax} ansteigt, ohne den Solarkreislauf abschalten zu müssen.

Hieraus folgt, dass im zweiten Regelbetrieb nicht mehr die Differenztemperatur zwischen Solarkollektor und Speicher, sondern die Kollektortemperatur selbst geregelt wird. Solange die Kollektortemperatur unter dem vorgegebenen Wert S_{K} bleibt, regelt das Mittel 24 die Temperatur des Kollektors T_{K} nach oben. Ergibt eine Prüfung im Schritt S8, dass die Temperatur T_{K} den Sollwert S_{K} erreicht hat, wird die Pumpenleistung erhöht. In der zweiten Regelschleife pendelt sich somit die Kollektortemperatur auf den Wert S_{K} ein. Erst wenn die Speichertemperatur wieder um einen bestimmten Betrag As unter die Grenztemperatur T_{G} gefallen ist (Prüfung im Schritt S7), erfolgt ein Zurückwechseln zum ersten Temperaturdifferenzregelbetrieb.

Bevorzugterweise wird der zweite Sollwert SK um einen Wert Aₖ unterhalb einer Kollektormaximaltemperatur T_{Kmax} und mindestens um den Sollwert S_{KS} des ersten Regelbetriebs oberhalb der Wärmespeichertemperatur Ts festgelegt, wobei der Wert Aₖ derart festgelegt ist, dass ein Sicherheitsabstand von S_{K} zur Kollektormaximaltermperatur T_{Kmax} gewährleistet ist. Im vorliegenden Ausführungsbeispiel der Erfindung ist der Wert von AK in einem Bereich von 5-15 % der Kollektormaximaltemperatur T_{Kmax} festgelegt wird, bei A_{K}=15 K bei T_{Kmax} = 130°C.

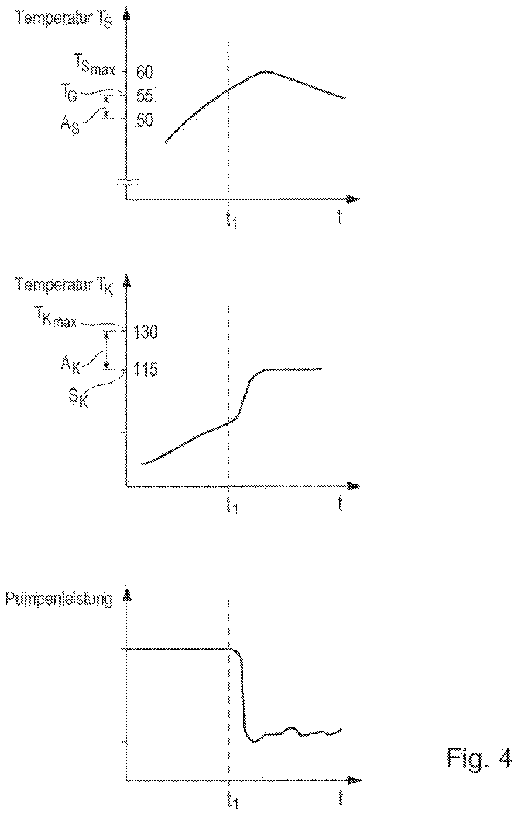

Fig. 4 zeigt beispielhaft den Verlauf der Speichertemperatur Ts, der Kollektortemperatur T_{K}, und der Pumpenleistung zum Zeitpunkt des Umschaltens vom ersten auf den zweiten Regelbetrieb bei Ausführung des erfindungsgemäßen Verfahrens. Im oberen Schaubild von Fig. 4 ist exemplarisch der zeitliche Verlauf der Speichertemperatur Ts dargestellt, im zweiten Diagramm der zeitliche Verlauf der Kollektortemperatur T_{K}, und im dritten Diagramm der zeitliche Verlauf der Pumpenleistung.

Der Wärmespeicher 5 hat die Speichermaximaltemperatur T_{Smax} von 60°C, der Solarkollektor 1 die Kollektormaximaltemperatur T_{Kmax} von 130°C. Als Solldifferenztemperatur S_{KS} ist 10 Kelvin vorgegeben. An einem Tag im Hochsommer mit starker Sonneneinstrahlung erreicht in der Ausgangssituation die Speichertemperatur Ts zum Zeitpunkt t₁ den vorgegebenen Grenzwert T_{G} von 55°C, die Kollektortemperatur T_{G} beträgt zu diesem Zeitpunkt 75°C. Bis dahin läuft die Pumpe 3 mit 100% Leistung. Zu diesem Zeitpunkt t₁ wechselt der Solarregler 20 vom ersten Temperaturdifferenzregelbetrieb zum zweiten Regelbetrieb, da die Prüfung im Schritt S3 ergibt, dass die Speichertemperatur Ts die Grenztemperatur überschritten hat. Die Prüfung im Schritt S8 ergibt, dass die Kollektortemperatur T_{K} (75°) kleiner als der zweite Sollwert S_{K} (115°) ist. Daher wird im Schritt S9 die Pumpenleistung reduziert. Dies ist im dritten Diagramm der Fig. 4 illustrativ dargestellt, wo die Pumpenleistung nach dem Zeitpunkt t₁ auf einen Minimalwert der Pumpenleistung abfällt. Dadurch erhöht sich die Kollektortemperatur T_{K} bis auf den vorgegebenen Sollwert S_{K} (115°). Nach Erreichen des Sollwerts S_{K} stellt der zweite Regelbetrieb sicher, dass die Kollektortemperatur T_{K} auf dem Wert S_{K} verbleibt.
Auf dem Temperaturniveau S_{K} hat der Solarkollektor aufgrund der Abstrahlverluste einen deutlich geringeren Wirkungsgrad, so dass die weitere Beladung des Speichers bis zu seiner Maximaltemperatur länger andauert, wodurch wiederum ein Abschalten des Solarkreislaufs verzögert und somit die Stagnationszeit reduziert wird.
Bei außergewöhnlichen starken Hitzeverhältnissen kann es dennoch dazu kommen, dass entweder die Speichermaximaltemperatur T_{Smax} oder die Kollektormaximaltemperatur T_{Kmax} erreicht wird.In diesem Fall wird die Solaranlage abgeschaltet. Dennoch wird durch den zweiten Regelbetrieb dieser Zeitpunkt hinausgezögert, so dass die Stagnationszeit im Vergleich zum Stand der Technik reduziert wird. Die dargestellte Stagnationsreduzierung ist dem bekannten Verfahren der Kühlfunktion und der Rückkühlfunktion des Kollektors überlegen, da der Wärmespeicher 5 nicht über seine Maximaltemperatur überladen wird. Somit besteht keine Gefahr von Verbrühungen an der Zapfstelle, eine zusätzliche Funktion zur Rückkühlung ist nicht erforderlich und die Anlagenkomponenten werden weniger belastet (kein Ein- und Austakten der Pumpe).

Temperaturgrößen, die mit der Einheit Grad Celsius (°C) beschrieben sind (T_{S}, TK, T_{G}, T_{Smax}, TKₘₐₓ, S_{K}) sind als absolute Temperaturangaben zu verstehen; Größen, die mit der Einheit Kelvin (K) beschrieben sind (S_{KS}, Einschaltpunkts, Ausschaltpunkt, S_{KS}, As, A_{K}) legen eine Temperaturdifferenz zu mindestens einer der Größen Ts, TK, T_{G}, T_{Smax}, TKₘₐₓ oder S_{K} fest.

Dem Fachmann ist klar, dass die Temperaturangaben der vorgestellten Ausführungsbeispiele in anderen Ausführungsbeispielen andere Werte annehmen, da die bevorzugten Temperaturbereiche der Größen T_{Smax}, TKₘₐₓ, S_{K}, S_{KS}, Einschaltpunkts, Ausschaltpunkt, S_{KS}, As, und A_{K} von verschieden Faktoren wie dem konstruktiven Aufbau und den eingesetzten Materialien der Solaranlage, dem Betriebstandort, und dem Betriebsmodus abhängt.

## Patentansprüche

1. Verfahren zum Regeln einer thermischen Solaranlage (10), bei der ein Wärmeträger in einem Solarkreislauf (8) mittels einer Pumpe (3) gefördert wird, das folgende Schritte umfasst:
- Erfassen einer Temperatur T_{K} , die von einer Temperatur eines Solarkollektors (1) abhängt,
- Erfassen einer Temperatur Ts, die von einer Temperatur einer Wärmespeicherstelle (5) abhängt,
- Berechnen einer Differenztemperatur T_{KS} aus T_{K} und Ts,
- Ausführen eines ersten Regelbetriebs, bei dem die Differenztemperatur T_{KS} auf einen vorbestimmten ersten Sollwert S_{KS} durch Steuerung einer Pumpenleistung geregelt wird,
**dadurch gekennzeichnet, dass**
das Verfahren folgende weitere Schritte umfasst:
- Ausführen eines zweiten Regelbetriebs, bei dem die Kollektortemperatur T_{K} auf einen vorbestimmten zweiten Sollwert S_{K} durch Steuerung der Pumpenleistung geregelt wird, wobei S_{K} so festgelegt wird, dass durch eine Erhöhung der Kollektortemperatur T_{K} die Energiezufuhr zur Wärmespeicherstelle (5) verringert wird,
- wobei vom ersten Regelbetrieb in den zweiten Regelbetrieb geschaltet wird, wenn im Förderbetrieb der Pumpe (3) die Temperatur Ts eine vorbestimmte Grenztemperatur T_{G} überschreitet, wobei die Grenztemperatur T_{G} kleiner als eine vorbestimmte Maximaltemperatur T_{Smax} der Wärmespeicherstelle (5) ist, und
- wobei vom zweiten Regelbetrieb in den ersten Regelbetrieb zurückgeschaltet wird, wenn die Temperatur Ts die Grenztemperatur T_{G} um mehr als einen vorbestimmten Wert Aₛ unterschreitet.

2. Verfahren nach Anspruch 1, **dadurch gekennzeichnet, dass**
der zweite Sollwert S_{K} um einen Wert Aₖ unterhalb einer Kollektormaximaltemperatur T_{Kmax} und mindestens um den Sollwert S_{KS} des ersten Regelbetriebs oberhalb der Wärmespeichertemperatur Ts liegt, wobei der Wert Aₖ derart festgelegt ist, dass ein Sicherheitsabstand von S_{K} zur Kollektormaximaltermperatur T_{Kmax} gewährleistet ist.

3. Verfahren nach Anspruch 2, wobei der Wert von A_{K} in einem Bereich von 5-15 % der Kollektormaximaltemperatur T_{Kmax} festgelegt wird.

4. Verfahren nach einem der vorherigen Ansprüche, **dadurch gekennzeichnet, dass** die Grenztemperatur T_{G} in einem Bereich von 60 bis 95% der Maximaltemperatur T_{Smax} der Wärmespeicherstelle (5) festgelegt wird.

5. Verfahren nach einem der vorherigen Ansprüche, wobei der Wert von Aₛ in einem Bereich von 5-15 % der Maximaltemperatur T_{Smax} der Wärmespeicherstelle (5) festgelegt wird.

6. Regelvorrichtung (20) für eine thermische Solaranlage (10), bei der ein Wärmeträger in einem Solarkreislauf (8) mittels einer Pumpe (3) gefördert wird, mit mindestens einer Temperaturmessstelle (4), die die Temperatur T_{K} erfasst, die von einer Temperatur eines Solarkollektors (1) abhängt, und mindestens einer Temperaturmessstelle (6), die die Temperatur Ts erfasst, die von einer Temperatur einer Wärmespeicherstelle (5) abhängt,
wobei die Regelvorrichtung (20) umfasst:
- Mittel (27) zur Empfangen der Werte der mindestens zwei Temperaturmessstellen (4,6),
- Mittel (26) zum Berechnen der Differenztemperatur T_{KS} aus T_{K} und Ts,
- Mittel (23) zum Ausführen eines ersten Regelbetriebs, bei dem die Differenztemperatur T_{KS} auf einen vorbestimmten ersten Sollwert S_{KS} durch Steuerung einer Pumpenleistung geregelt wird,
**dadurch gekennzeichnet, dass**
die Regelvorrichtung (20) folgende weitere Mittel umfasst:
- Mittel (24) zum Ausführen eines zweiten Regelbetriebs, bei dem die Kollektortemperatur T_{K} auf einen vorbestimmten zweiten Sollwert S_{K} durch Steuerung der Pumpenleistung geregelt wird, wobei S_{K} so festgelegt wird, dass durch eine Erhöhung der Kollektortemperatur T_{K} die Energiezufuhr zur Wärmespeicherstelle (5) verringert wird,
- Mittel zum Umschalten vom ersten Regelbetrieb in den zweiten Regelbetrieb, wenn im Förderbetrieb der Pumpe (3) die Temperatur Ts eine vorbestimmte Grenztemperatur T_{G} überschreitet, wobei die Grenztemperatur T_{G} kleiner als eine vorbestimmte Maximaltemperatur T_{Smax} der Wärmespeicherstelle (5) ist, und
- Mittel zum Zurückschalten vom zweiten Regelbetrieb in den ersten Regelbetrieb, wenn die Temperatur Ts die Grenztemperatur T_{G} um mehr als einen vorbestimmten Wert Aₛ unterschreitet.

7. Regelvorrichtung (20) nach Anspruch 6, **dadurch gekennzeichnet, dass** der zweite Sollwert S_{K} um einen Wert Aₖ unterhalb einer Kollektormaximaltemperatur T_{Kmax} und mindestens um den Sollwert S_{KS} des ersten Regelbetriebs oberhalb der Wärmespeichertemperatur Ts liegt, wobei der Wert Aₖ derart festgelegt ist, dass ein Sicherheitsabstand von S_{K} zur Kollektormaximaltermperatur T_{Kmax} gewährleistet ist.

8. Regelvorrichtung (20) nach Anspruch 7, wobei der Wert von A_{K} in einem Bereich von 5-15 % der Kollektormaximaltemperatur T_{Kmax} festgelegt wird.

9. Regelvorrichtung (20) nach einem der vorherigen Ansprüche 6 bis 8, **dadurch gekennzeichnet, dass** die Grenztemperatur T_{G} in einem Bereich von 85 bis 95% % der Maximaltemperatur T_{Smax} der Wärmespeicherstelle (5) festgelegt wird.

10. Regelvorrichtung (20) nach einem der vorherigen Ansprüche 6 bis 9, wobei der Wert von As in einem Bereich von 5-15 % der Maximaltemperatur T_{Smax} der Wärmespeicherstelle (5) festgelegt wird.

11. Eine thermische Solaranlage (10), bei der ein Wärmeträger in einem Solarkreislauf (8) mittels einer Pumpe (3) gefördert wird, die eine Regelvorrichtung (20) gemäß einem der Ansprüche 6 bis 10 umfasst.

## Claims

1. A method of regulating a thermal solar plant (10), in which a heat carrier is conveyed in a solar circuit (8) by means of a pump (3), comprising the steps of:
- detecting a temperature T_{K} which depends on a temperature of a solar collector (1),
- detecting a temperature Tₛ, which depends on a temperature of a heat accumulator area (5),
- calculating a differential temperature T_{KS} from T_{K} and Ts,
- performing a first regulating operation in which said differential temperature T_{KS} is regulated to a predetermined first setpoint value S_{KS} by controlling a pumping power,
**characterized in that**
said method comprising the further steps of:
- performing a second regulating operation, in which said collector temperature T_{K} is regulated to a predetermined second setpoint value S_{K} by controlling the pumping power, S_{K} being set such that the supply of energy to said heat accumulator area (5) is reduced by increasing said collector temperature T_{K,}
- wherein a switch from said first regulating operation to said second regulating operation is performed when, during the pumping operation of said pump (3), said temperature Tₛ exceeds a predetermined limit temperature T_{G}, where said limit temperature T_{G} is smaller than a predetermined maximum temperature Tsmax of said heat accumulator area (5), and
- wherein a switch back from said second regulating operation to said first regulating operation is performed when said temperature Ts falls below said limit temperature T_{G} by more than a predetermined value As.

2. The method according to claim 1, **characterized in that**
said second setpoint value S_{K} is smaller than a collector maximum temperature T_{Kmax} by a value A_{K} and is larger than said heat accumulator temperature Ts by at least said setpoint value S_{KS} of said first regulating operation, said value A_{K} being set such that a safety distance from S_{K} to said collector maximum temperature T_{Kmax} is ensured.

3. The method of claim 2, wherein the value of A_{K} is set within a range from 5-15 % of said collector maximum temperature T_{Kmax}.

4. The method according to any one of the preceding claims, **characterized in that** said limit temperature T_{G} is set within a range from 60 to 95 % of said maximum temperature T_{Smax} of said heat accumulator area (5).

5. The method according to any one of the preceding claims, wherein the value of As is set within a range from 5-15 % of said maximum temperature Tsmax of said heat accumulator area (5).

6. Regulating device (20) for a thermal solar plant (10), in which a heat transfer medium is conveyed in a solar circuit (8) by means of a pump (3), having at least one temperature measuring point (4), which detects the temperature T_{K} depending on a temperature of a solar collector (1), and at least one temperature measuring point (6), which detects the temperature Ts depending on a temperature of a heat accumulator area (5),
said regulating device (20) comprising:
- means (27) for receiving the values of said at least two temperature measuring points (4,6),
- means (26) for calculating the differential temperature T_{KS} from T_{K} and Ts,
- means (23) for performing a first regulating operation in which said differential temperature T_{KS} is regulated to a predetermined first setpoint value S_{KS} by controlling a pumping power,
**characterized in that**
said regulating device (20) comprises the following further means:
- means (24) for performing a second regulating operation, in which said collector temperature T_{K} is regulated to a predetermined second setpoint value S_{K} by controlling the pumping power, S_{K} being set such that the supply of energy to said heat accumulator area (5) is reduced by increasing said collector temperature T_{K},
- means for switching from said first regulating operation to said second regulating operation when, during the pumping operation of said pump (3), said temperature Tₛ exceeds a predetermined-limit temperature T_{G}, where said limit temperature T_{G} is smaller than a predetermined maximum temperature Tsmax of said heat accumulator area (5), and
- means for switching back from said second regulating operation to said first regulating operation, when said temperature Ts falls below said limit temperature T_{G} by more than a predetermined value As.

7. Regulating device (20) according to claim 6, **characterized in that**
said second setpoint value S_{K} is smaller than a collector maximum temperature T_{Kmax} by a value A_{K} and is larger than said heat accumulator temperature T_{S} by at least said setpoint value S_{KS} of said first regulating operation, said value A_{K} being set such that a safety distance from S_{K} to said collector maximum temperature T_{Kmax} is ensured.

8. Regulating device (20) according to claim 7, wherein the value of A_{K} is set within a range from 5-15 % of said collector maximum temperature T_{Kmax}.

9. Regulating device (20) according to any one of the preceding claims 6 to 8, **characterized in that** said limit temperature T_{G} is set within a range from 60 to 95 % of said maximum temperature Tsmax of said heat accumulator area (5).

10. Regulating device (20) according to any one of the preceding claims 6 to 9, wherein the value of As is set within a range from 5-15 % of said maximum temperature Tsmax of said heat accumulator area (5).

11. A thermal solar plant (10), in which a heat carrier is conveyed in a solar circuit (8) by means of a pump (3), comprising a regulating device (20) according to any one of claims 6 to 10.

## Revendications

1. Procédé de régulation d'une installation solaire thermique (10) dans laquelle un caloporteur circule dans un circuit solaire (8) au moyen d'une pompe, comprenant les étapes suivantes consistant à :
- détecter une température T_{K} qui dépend d'une température d'un collecteur solaire (1),
- détecter une température Ts qui dépend d'une température d'un emplacement d'accumulation de chaleur (5),
- calculer une température différentielle T_{KS} à partir de T_{K} et de Ts,
- exécuter une première régulation dans laquelle la température différentielle T_{KS} est régulée à une première valeur de consigne prédéterminée S_{KS} par commande d'une puissance de pompe,
**caractérisé en ce que**
le procédé comprend les autres étapes suivantes consistant à :
- exécuter une seconde régulation dans laquelle la température du collecteur T_{K} est régulée à une seconde valeur de consigne prédéterminée S_{K} par commande de la puissance de pompe, S_{K} étant fixée de telle sorte que par une augmentation de la température de collecteur T_{K} l'alimentation en énergie vers l'emplacement d'accumulation de chaleur (5) est réduite,
- passer de la première régulation vers la seconde régulation lorsque pendant le refoulement de la pompe (3) la température Ts dépasse une température limite prédéterminée T_{G}, la température limite T_{G} étant inférieure à une température maximale prédéterminée T_{Smax} de l'emplacement d'accumulation de chaleur (5), et
- revenir de la seconde régulation vers la première régulation lorsque la température Ts passe au-dessous de la température limite T_{G} de plus d'une valeur prédéterminée As.

2. Procédé selon la revendication 1, **caractérisé en ce que** la seconde valeur de consigne S_{K} est inférieure d'une valeur Aₖ à une température maximale de collecteur T_{Kmax} et supérieure d'au moins de la valeur de consigne S_{KS} de la première régulation à la température d'accumulation de chaleur Ts, la valeur Aₖ étant fixée de manière à assurer un écart de sécurité de S_{K} par rapport à la température maximale de collecteur T_{Kmax}.

3. Procédé selon la revendication 2, dans lequel la valeur de Aₖ est fixée dans une plage de 5 à 15 % de la température maximale de collecteur T_{Kmax}.

4. Procédé selon l'une des revendications précédentes, **caractérisé en ce que** la température limite T_{G} est fixée dans une plage de 60 à 95 % de la température maximale T_{Smax} de l'emplacement d'accumulation de chaleur (5).

5. Procédé selon l'une des revendications précédentes, dans lequel la valeur de As est fixée dans une plage de 5 à 15 % de la température maximale T_{Smax} de l'emplacement d'accumulation de chaleur (5).

6. Dispositif de régulation (20) pour une installation solaire thermique (10), dans laquelle un caloporteur circule dans un circuit solaire (8) au moyen d'une pompe (3), comprenant au moins un emplacement de mesure de température (4) qui détecte la température T_{K} qui dépend d'une température d'un collecteur solaire (1), et au moins un emplacement de mesure de température (6) qui détecte la température Ts qui dépend d'une température d'un emplacement d'accumulation de chaleur (5),
le dispositif de régulation (20) comprenant :
- des moyens (27) pour recevoir les valeurs desdits au moins deux emplacements de mesure de température (4, 6),
- des moyens (26) pour calculer la température différentielle T_{KS} à partir de T_{K} et de Ts,
- des moyens (23) pour exécuter une première régulation dans laquelle la température différentielle T_{KS} est régulée à une première valeur de consigne prédéterminée S_{KS} par commande d'une puissance de pompe,
**caractérisé en ce que**
le dispositif de régulation (20) comprend les autres moyens suivants :
- des moyens (24) pour exécuter une seconde régulation dans laquelle la température du collecteur T_{K} est régulée à une seconde valeur de consigne prédéterminée S_{K} par commande de la puissance de pompe, S_{K} étant fixée de telle sorte que par une augmentation de la température de collecteur T_{K} l'alimentation en énergie vers l'emplacement d'accumulation de chaleur (5) est réduite,
- des moyens pour passer de la première régulation vers la seconde régulation lorsque pendant le refoulement de la pompe (3) la température Ts dépasse une température limite prédéterminée T_{G}, la température limite T_{G} étant inférieure à une température maximale prédéterminée T_{Smax} de l'emplacement d'accumulation de chaleur (5), et
- des moyens pour revenir de la seconde régulation vers la première régulation lorsque la température Ts passe au-dessous de la température limite T_{G} de plus d'une valeur prédéterminée As.

7. Dispositif de régulation (20) selon la revendication 6, **caractérisé en ce que** la seconde valeur de consigne S_{K} est inférieure d'une valeur Aₖ à une température maximale de collecteur T_{Kmax} et supérieure d'au moins de la valeur de consigne S_{KS} de la première régulation à la température d'accumulation de chaleur Ts, la valeur Aₖ étant fixée de manière à assurer un écart de sécurité de S_{K} par rapport à la température maximale de collecteur T_{Kmax}.

8. Dispositif de régulation (20) selon la revendication 7, dans lequel la valeur de Aₖ est fixée dans une plage de 5 à 15 % de la température maximale de collecteur T_{Kmax}.

9. Dispositif de régulation (20) selon l'une des revendications 6 à 8, **caractérisé en ce que** la température limite T_{G} est fixée dans une plage de 85 à 95 % de la température maximale T_{Smax} de l'emplacement d'accumulation de chaleur (5).

10. Dispositif de régulation (20) selon l'une des revendications 6 à 9, dans lequel la valeur de As est fixée dans une plage de 5 à 15 % de la température maximale T_{Smax} de l'emplacement d'accumulation de chaleur (5).

11. Installation solaire thermique (10) dans laquelle un fluide caloporteur circule dans un circuit solaire (8) au moyen d'une pompe (3), qui comprend un dispositif de régulation (20) selon l'une des revendications 6 à 10.
